# EUROPEAN PATENT SPECIFICATION

(11) **EP 1 731 430 B1**
(45) Date of publication and mention of the grant of the patent: **04.03.2009**
(21) Application number: 05291260.7
(22) Date of filing: 10.06.2005
(51) Int. Cl.: B65B 25/06, A23B 4/06

(54) **Method of preserving a fish meat product**
Verfahren zur Haltbarmachung von Fischfleisch
Procédé pour la conservation de la viande de poisson

(43) Date of publication of application: 13.12.2006
(73) Proprietor: Fortune Frozen Foods, Co Ltd, Chien Ching Dist Kaohsiung (TW)
(72) Inventor: Tsai, Chun-Hsiung, Chien Ching Dist. Kaohsiung (TW)
(74) Representative: Pontet, Bernard

(56) References cited:
- EP-A- 0 242 183
- WO-A-97/39951
- FR-A- 2 613 588
- US-A- 5 256 434
- US-A- 5 863 576
- US-B1- 6 551 641

## Description

The invention relates to a method of preserving a fish meat product, more particularly to a method of preserving a fish meat product in a vacuum package containing an oxygen-containing protective gas having a predetermined vacuum pressure.

Fish meat is susceptible to bacterial spoilage. Therefore, fresh fish must be subjected to proper preservation treatments after harvesting in order to preserve freshness.

The most extensively adopted preservation treatments include bleeding, sterilizing, and low-temperature storing (e.g., cold storing or freezing) to help maintain the freshness and luster of fish meat. Thereafter, the fish is packaged and transported in cold storage so as to preserve the freshness of the fish meat for an extended period.

Fish packaging techniques generally include vacuum packaging and modified or controlled atmosphere packaging. In comparison, vacuum packed fish meat is prone to color changes and an escape of tissue exudates from the fish meat. Documents WO 97/39951 and US 5,863,576 disclose such vacuum packed fish meat.

Moreover, vacuum packed fish meat may be contaminated by anaerobes, such as Clostridium botulinum. If the vacuum packed fish meat is inadvertently exposed to a temperature exceeding 4°C, anaerobic Clostridium botulinum will breed to decompose the fish meat, thereby resulting in bad odor, decoloration and putrification of the fish meat. Furthermore, Clostridium botulinum may build up in the fish meat before color change of the fish meat is observable, thereby posing a serious threat to consumers.

In addition, as the vacuum package needs to be opened for thawing the fish meat, once the fish meat comes into contact with the air after the vacuum package is opened for thawing, bacteria may breed to contaminate the fish meat.

In view of the aforesaid problems associated with vacuum packed fish meat, controlled or modified atmosphere packaging of fish products is becoming more and more popular, and invites research and development.

Therefore, the object of the present invention is to provide a method of preserving a fish meat product, which can inhibit growth of both aerobic and anaerobic bacteria to thereby preserve the freshness of the fish meat product.

According to this invention, a method of preserving a fish meat product includes:
(a) cleaning and sterilizing the fish meat product;
(b) packing the cleaned fish meat product in a package;
(c) after sterilizing, vacuuming the package and subsequently filling the vacuumed package with an oxygen-containing protective gas having a vacuum pressure ranging from 80% to 95% of atmosphere, the oxygen-containing protective gas including oxygen, carbon dioxide, and nitrogen;
(c) freezing quickly the vacuumed package in a super-cold environment having temperature ranging from -60°C to -70°C; and
(d) storing the vacuumed package in a freezing environment having a temperature ranging from -20°C to -60°C after being frozen at the temperature of -60°C to -70°C.

Other features and advantages of the present invention will become apparent in the following detailed description of the preferred embodiment with reference to the accompanying drawing, of which:

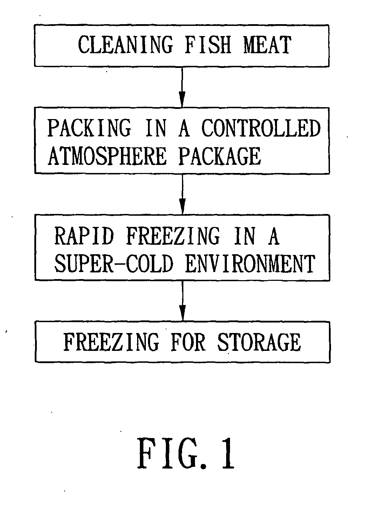

Figure 1 is a flowchart illustrating the preferred embodiment of a method of preserving a fish meat product according to this invention.

Referring to Figure 1, the preferred embodiment of a method of preserving a fish meat product according to the present invention is mainly used for fish that can be cut into relatively thin slices after skinning, such as Taiwan porgy, cobia, greater amberjack, salmon, tuna, etc. The method of this invention includes the step of cleaning the fish meat product in a low-temperature environment. The cleaning step includes bleeding, gutting, and sterilizing the fish meat product to help preserve the freshness of the fish meat product and to maintain the fish meat product in a sterilized condition.

Next, the sterilized fish meat product is packed in a sterilized package which is vacuumed and which is subsequently filled with an oxygen-containing protective gas having a vacuum pressure ranging from 80% to 95% of atmosphere before sealing. Thus, the fish meat product can be preserved in a controlled atmosphere containing a predetermined amount of oxygen so as to effectively prevent breeding of both aerobic and anaerobic bacteria/microorganisms, thereby preserving the freshness of the fish meat product. In this embodiment, the vacuum pressure of the oxygen-containing protective gas ranges from 720 mmHg to 700 mmHg. The oxygen-containing protective gas is air, and includes oxygen, carbon dioxide, and nitrogen.

Thereafter, the package together with the fish meat product is frozen quickly in a super-cold environment having a temperature ranging from -60°C to -70°C so as to further inhibit growth of bacteria.

Afterwards, the package together with the fish meat product is stored in a freezing environment having a temperature ranging from -20°C to -60°C after being frozen at the temperature of -60°C to -70°C.

In this invention, since the fish meat product is stored in a package containing air having a vacuum pressure ranging from 80% to 95% of atmosphere, growth of both aerobic and anaerobic bacteria inside the package can be inhibited to preserve the freshness of the fish meat product. Furthermore, as the package contains a suitable amount of air therein, the fish meat product can be thawed in the refrigerator or at room temperature with the package intact to prevent contamination of the fish meat product by bacteria. Thus, the drawbacks associated with the prior art can be effectively eliminated.

## Claims

1. A method of preserving a fish meat product, comprising:
(a) cleaning and sterilizing the fish meat product;
(b) packing the cleaned fish meat product in a package;
(c) after sterilizing, vacuuming the package, **characterized in that** the vacuumed package is subsequently filled with an oxygen-containing protective gas having a vacuum pressure ranging from 80% to 95% of atmosphere, the oxygen-containing protective gas including oxygen, carbon dioxide, and nitrogen;
the method further comprising:
(d) freezing quickly the vacuumed package in a super-cold environment having a temperature ranging from -60°C to -70°C; and
(e) storing the vacuumed package in a freezing environment having a temperature ranging from -20°C to -60°C after being frozen at the temperature of -60°C to -70°C.

## Patentansprüche

1. Verfahren zum Haltbarmachung von Fischfleisch wobei:
(a) das Fischfleisch saubergemacht und sterilisiert wird;
(b) das saubergemachte Fischfleisch in eine Packung eingepackt wird;
(c) nach der Sterilisierung die Packung vakuumiert wird, **dadurch gekennzeichnet, dass** die vakuumierte Packung danach mit einem sauerstoffhaltigen Schtzgas gefüllt wird, dessen Vakuumdruck zwischen 80% und 95% der Atmosphäre liegt, wobei das sauerstoffhaltige Schutzgas Sauerstoff, Kohlendioxid und Stickstoff beeinhaltet;
wobei das Verfahren ferner umfasst:
(d) die vakuumierte Packung schnell in einem super-kalten Umfeld eingefriert wird, dessen Temperatur zwischen -60°C und - 70°C liegt; und
(e) die vakuumierte Packung in einem Gefrierumfeld gelagert wird, dessen Temperatur zwischen -20°C und -60°C liegt, nachdem sie bei der zwischen -60°C und -70°C liegendenTemperatur eingefriert wurde.

## Revendications

1. Un procédé pour préserver un produit de chair de poisson, comprenant comme étapes:
(a) nettoyer et stériliser le produit de chair de poisson ;
(b) emballer dans un emballage le produit de chair de poisson nettoyé;
(c) après la stérilisation, dépressuriser l'emballage, **caractérisé en ce que** l'emballage dépressurisé est par la suite rempli avec un gaz protecteur contenant de l'oxygène et ayant une pression de dépressurisation comprise entre 80% et 95% d'atmosphère, le gaz protecteur incluant de l'oxygène, du dioxyde de carbone, et de l'azote;
le procédé comprenant en outre:
(d) refroidir rapidement l'emballage dépressurisé dans un environnement super-refroidi ayant une température comprise entre -60°C et -70°C; et
(e) conserver l'emballage dépressurisé dans un environnement refroidi ayant une température comprise entre -20°C et -60°C après avoir été refroidi à la température comprise entre -60°C et -70°C.
